# EUROPÄISCHE PATENTANMELDUNG

(11) **EP 1 452 939 A1**
(43) Veröffentlichungstag der Anmeldung: **01.09.2004**
(21) Anmeldenummer: 03009216.7
(22) Anmeldetag: 23.04.2003
(51) Int. Cl.: G06F 1/00, G06F 17/60

(54) **Verfahren und System zur sicheren elektronischen Online-Abwicklung von Geschäftsvorgängen**

(30) Priorität: 25.02.2003 DE 10308264
(71) Anmelder: Deutsche Telekom AG, 53113 Bonn (DE)
(72) Erfinder: Halbe, Hubertus, Dipl.-Ing., 57482 Wenden (DE); Klur, Dieter, Dipl.-Ing., 57482 Wenden (DE); Knickmann, Lars, Dipl.-Ing., 57482 Wenden (DE)

(57) **Zusammenfassung**

Die Erfindung betrifft die Abwicklung von Geschäftsvorgängen unter Einbeziehung eines elektronischen Online-Systems.

Aufgabe der Erfindung ist es, einen neuen und verbesserten Weg zur sicheren elektronischen Online-Abwicklung von Geschäftsvorgängen aufzuzeigen, mit welchem insbesondere ein sicherer Online-Abschluss bei Vermeidung eines zeitlich und technisch aufwendigen und also kostenintensiven Einsatzes kundenspezifischer Sicherheitsdaten gewährleistet ist.

Die Erfindung schlägt zur sicheren elektronischen Online-Abwicklung eines Geschäftsvorgangs unter Verwendung wenigstens eines durch einen Anbieter auf einem Rechnersystem (1) bereitgestellten und über das Internet (3) zugänglichen Geschäftsformulars, und zwar zwischen wenigstens zwei Geschäftspartnern (K) oder wenigstens einem Geschäftspartner (K) und dem Anbieter, vor, Geschäftspartnern (K), die sich zusammen an einem Ort aufhalten wenigstens einen Mitarbeiter (M) des Anbieters beizuordnen und den Geschäftsvorgang unter Ansprechen auf die Übertragung an das Rechnersystem (1) von wenigstens einem dem wenigstens einen Mitarbeiter (M) des Anbieters vom Rechnersystem (1) eindeutig, zuordenbaren Sicherheitsdatensatz online durchzuführen und abzuschließen.

## Beschreibung

Die Erfindung betrifft insbesondere ein Verfahren zur sicheren Abwicklung von Geschäftsvorgängen unter Einbeziehung eines elektronischen Online-Systems sowie ein entsprechend angepasstes Online-System.

Verschiedene Arten einer Abwicklung von Geschäftsvorgängen unter Einbeziehung eines elektronischen Online-Systems sind bekannt.

So ist beispielsweise bekannt, dass ein Anbieter einen Online-Server bereitstellt, auf den ein Kunde über ein Terminal mit entsprechendem Anschluss zugreifen kann. Auf dem Server sind Formulare elektronisch gespeichert, aus denen der Kunde je nach gewünschtem Geschäftsvorgang Eines auswählen und die Bearbeitung bzw. das Ausfüllen des Formulars durchführen kann. Ein solcher Online-Server ist insbesondere ein WEB-Server, auf den über ein Terminal mit Internetzugang zugegriffen werden kann.

Für den sicheren Abschluss eines derartigen Geschäftsvorgangs muss jedoch entweder das gegebenenfalls Online bearbeitete Formular zunächst in ein Papier-Formular umgewandelt werden, welches anschließend vom Kunden unterschrieben an den Anbieter per Post zumindest zur Bestätigung geschickt wird, oder über das mit dem Online-Server verbundene Kundenterminal muss zumindest ein Kundenspezifischer Sicherheitsdatensatz zur Identifizierung und/oder Bestätigung an den Server übertragen werden. Ein solcher Kundenspezifischer Datensatz umfasst insbesondere eine persönliche Identifikationsnummer (PIN) und/oder eine Transaktionsnummer (TAN). Der Kundenspezifische Datensatz muss also dem Kunden zuvor vom Anbieter zugewiesen und dem Kunden bekannt sein.

Nachteile sind hierbei insbesondere, dass bei Papier gebundener Bestätigung regelmäßig lange Laufzeiten bis zum Abschluss des Geschäftsvorganges in Kauf genommen werden müssen. Ferner bedarf es zur Erzeugung, Zuweisung und Verwaltung Kundenspezifischer Sicherheitsdatensätze, insbesondere auf Anbieterseite hohe Rechner- und Speicherkapazitäten sowie sicherheitstechnische Maßnahmen. Ferner sind bei der Übergabe derartiger Sicherheitsdatensätze an den Kunden üblicherweise weitere anwendungsspezifische sicherheitstechnische Maßnahmen zu beachten. Werden Sicherheitsdatensätze auf elektronischem Weg über ein Kommunikationsnetz, beispielsweise über das Internet übermittelt, bedeutet dies darüber hinaus eine erweiterte Auslastung der zur Verfügung stehenden Netzkapazitäten. Werden Sicherheitsdatensätze auf dem postalischen Weg übermittelt, führt dies wiederum zu langen Laufzeiten, bis mit den Daten erstmalig ein Geschäftsvorgang bearbeitet werden kann.

Eine Aufgabe der Erfindung ist es, einen neuen und verbesserten Weg zur sicheren elektronischen Online-Abwicklung von Geschäftsvorgängen aufzuzeigen, mit welchem vorstehende Probleme der Standes der Technik überwindbar sind, insbesondere ein sicherer Online-Abschluss bei Vermeidung eines zeitlich und technisch aufwendigen und also kostenintensiven Einsatzes kundenspezifischer Sicherheitsdaten gewährleistet ist.

Die erfindungsgemäße Lösung der Aufgabe ist auf höchst überraschende Weise bereits durch ein Verfahren mit den Merkmalen des Anspruchs 1, durch ein System mit den Merkmalen des Anspruchs 11 sowie durch ein Computerprogrammprodukt, ein Computerprogramm und ein digitales Speichermedium mit den Merkmalen des Anspruchs 19, 20 bzw. 21 gegeben.

Vorteilhafte und/oder bevorzugte Ausführungsformen bzw. Weiterbildungen sind Gegenstand der jeweiligen Unteransprüche.

Die erfindungsgemäße Lösung sieht ein Verfahren zur sicheren abschließenden elektronischen Online-Abwicklung eines Geschäftsvorgangs unter Verwendung eines durch einen Anbieter auf einem Rechnersystem bereitgestellten und über das Internet zugänglichen Geschäftsformulars vor. Der Geschäftsvorgang wird hierbei zwischen wenigstens zwei Geschäftspartnern oder wenigstens einem Geschäftspartner und dem Anbieter durchgeführt. Zur Online-Abwicklung schlägt die Erfindung vor, Geschäftspartnern, die sich zusammen an einem Ort aufhalten, wenigstens einen Mitarbeiter des Anbieters beizuordnen und den Geschäftsvorgang unter Ansprechen auf die Übertragung wenigstens eines dem wenigstens einen Mitarbeiter des Anbieters eindeutig zuordenbaren Sicherheitsdatensatzes an das Rechnersystem Online durchzuführen und abzuschließen.

Eine vorherige Zuweisung von kundenspezifischen Datensätzen durch den Anbieter sowie der zur Verifizierung eines Geschäftsvorgangs bisher notwendigen Speicherung derartiger, einer Vielzahl von Kunden zugewiesenen Sicherheitsdatensätzen auf Seiten des Anbieters ist somit vermeidbar, welches zu einer wesentlichen Reduzierung der auf Anbieterseite benötigten hohen Rechner- und Speicherkapazitäten führt. Darüber hinaus bedarf es nicht mehr einer bisher unter hohem sicherheitstechnischem Aufwand durchzuführenden Übermittlung der Sicherheitsdatensätze an eine Vielzahl von Kunden bzw. Geschäftspartnern.
Insbesondere in Bereichen, bei denen eine derartige Übermittlung bisher unter Einsatz elektronischer Übertragungswege erfolgt ist, wird folglich eine große Menge an Kapazitäten von zur Bereitstellung und Durchführung einer elektronischen Online-Abwicklung verwendeten Übertragungsnetzen freigestellt.

Indem Geschäftspartnern, die sich an einem gemeinsamen Ort aufhalten, ein Mitarbeiter des Anbieters beigeordnet wird, bedarf es folglich für eine Vielzahl von unterschiedlichen Geschäftsvorgängen lediglich der Zuweisung, Speicherung und bei Durchführung einer Online-Abwicklung der Verifizierung eines dem Mitarbeiter zuordenbaren Satzes an Sicherheitsdaten, -passwörter und/oder Kennungen. Somit können ferner, auch ohne dass Geschäftspartnern eindeutige Sicherheitsdatensätze oder elektronische Signaturen besitzen und/oder im Vorfeld zugewiesen werden, Geschäftsvorgänge Online durchgeführt und abgeschlossen werden.

Das erfindungsgemäße Verfahren wird bevorzugt mittels eines Online-Systems durchgeführt, welches zumindest ein über das Internet unter zumindest einer Domain zugängliches Rechnersystem eines Online-Anbieters umfasst, in welchem Daten über Geschäftsformulare abgelegt sind und auf welchem ein Programm abläuft. Das applikationsspezifisch programmgestützte Rechnersystem steuert unter Ansprechen auf eine zumindest zeitweise aufgebaute Kommunikationsverbindung von wenigstens einer Internetfähigen Endeinrichtung zu dem Rechnersystem und auf den Empfang wenigstens eines einem Mitarbeiter des Anbieters eindeutig zuordenbaren Sicherheitsdatensatzes die elektronische Online-Abwicklung eines Geschäftsvorgangs.

Zweckmäßigerweise umfasst das Rechnersystem eine Zuordnungseinrichtung mit Speicher, mittels welcher zumindest für die Dauer einer jeweiligen Online-Abwicklung eine logische Verbindung zwischen einem übertragenen Sicherheitsdatensatz und den Geschäftspartnern durchführbar ist, die sich am gleichen Ort wie der Mitarbeiter aufhalten, dem der Sicherheitsdatensatz eindeutig durch Verifikation des Rechnersystems zugeordnet wird. Hierdurch ist gewährleistet, dass während einer Online-Abwicklung im Wesentlichen sämtliche Sicherheitsdatensätze eines Mitarbeiters, insbesondere zur Bestätigung, Signierung und/oder Authentikation den jeweils beteiligten Geschäftspartnern zurechenbar ist und also die Mitarbeiter quasi als Zeugen oder Mittler fungieren, um Geschäftsvorgänge unmittelbar Online abschließend bearbeiten zu können.

Insbesondere, um eine solche logische Zuordnung zwischen Geschäftspartnern und Mitarbeiter zugewiesenen Sicherheitsdaten herzustellen, ist in zweckmäßiger Weise vorgesehen, dass zur Initialisierung einer Online-Abwicklung das Rechnersystem zunächst eine Authentikationsprozedur unter Ansprechen auf einen vom Rechnersystem empfangenen ersten Sicherheitsdatensatz des Mitarbeiters durchführt.

Um neben der Zuordnung von Geschäftspartnern zu einem Mitarbeiter ferner eine eindeutige Identifizierung eines Geschäftsvorgangs stets zu ermöglichen, wird in weiterer bevorzugter Ausführung vom Rechnersystem einem zur Bearbeitung ausgewählten Geschäftsformular zweckmäßigerweise eine eindeutige Bearbeitungskennung zugeordnet bevor das ausgewählte Geschäftsformular zur Bearbeitung freigegeben wird. Je nach ausgewähltem Geschäftsformular ist in alternativer Ausführung ferner vorgesehen, dass für einzelne Bereiche des Geschäftsformulars derartige eindeutige Kennungen generiert und/oder zugeordnet werden.

Insbesondere, wenn während der gesamten Dauer der Abwicklung des Geschäftsvorgangs bzw. während der Bearbeitung des Geschäftsformulars eine Daten- und/oder Kommunikationsverbindung zwischen der Internetfähigen Endeinrichtung und dem auf Anbieterseite bereitgestellten Rechnersystem besteht, sieht die Erfindung in zweckmäßiger Weiterbildung vor, nach Bearbeitung eines einer eindeutigen Kennung zugeordneten Geschäftsformulars und/oder Bereichs eines Geschäftsformulars eine jeweilige Bestätigungsprozedur unter Ansprechen auf einen vom Rechnersystem empfangenen weiteren Sicherheitsdatensatz des Mitarbeiters durchzuführen.

Ergänzend oder insbesondere alternativ, wenn eine dauerhafte Kommunikationsverbindung während der Abwicklung des Geschäftsvorgangs nicht gegeben ist, sieht die Erfindung in weiterer zweckmäßiger Ausgestaltung vor, ein bearbeitetes, einer eindeutigen Kennung zugeordnetes Geschäftsformular, einen bearbeiteten, einer eindeutigen Kennung zugeordneten Bereich und/oder je nach Geschäftsvorgang die entsprechende eindeutige Kennung eines solchen bearbeiteten Geschäftsformulars und/oder Bereichs an das Rechnersystem zur Bestätigung zurück zu übertragen.

Zum Abschließen einer Online-Abwicklung, insbesondere auch zur weiteren Erhöhung der Sicherheit gegenüber Manipulationen sieht die Erfindung in zweckmäßiger Weiterbildung vor, dem Geschäftsvorgang vom Rechnersystem eine eindeutige Abschlusskennung zuzuordnen, die dem wenigstens einen Geschäftspartner angezeigt wird.

In zweckmäßiger Weiterbildung werden, um insbesondere einen dauerhaften Nachweis über den tatsächlich gewollten Geschäftsabschluss des Geschäftspartners auch unabhängig von persönlichen elektronischen Signaturen sicherzustellen, alle vom Rechnersystem zugeordneten eindeutigen Kennungen, beispielsweise mittels einer Druckereinrichtung, auf ein Papierdokument übertragen und von dem wenigstens einen Geschäftspartner abgezeichnet. In ergänzender und/oder alternativer Ausführung ist die Übertragung eines bearbeiteten Formulars und/oder eines jeweils bearbeiteten Bereichs eines Geschäftsformulars auf ein Papierdokument, welches von dem wenigstens einen Geschäftspartner abgezeichnet wird, vorgesehen.

Die Erfindung gewährleistet somit, dass ein Kunde bzw. Geschäftspartner keinerlei technische Hilfsmittel für Authentikationen, Signaturen und/oder Bearbeitungsbestätigungen benötigt, da der als Zeuge und/oder Vermittler fungierende Mitarbeiter alle notwendigen Voraussetzungen für einen sicheren Abschluss des Vorgangs, also insbesondere alle benötigten Sicherheitsdatensätze, wie beispielsweise persönliche Identifikationsnummern, Transaktionsnummern, Passwörter, Einmal-Passwörter, Zertifikate und/oder sonstige Zugangs- und/oder Absicherungsschlüssel besitzt, die für eine Vielzahl von Geschäftsvorgängen einsetzbar sind. Darüber hinaus ist insbesondere für eine Vielzahl von Mitarbeiter ein schneller und einfacher zentraler Zugriff auf eine Vielzahl von jederzeit aktuellen Online-Formularen gewährleistet, ohne dass eine technisch aufwendige Aktualisierung von dezentral eingesetzten elektronischen und/oder Papierbasierten Hilfsmitteln erforderlich ist.

Somit ist im Wesentlichen unabhängig von der Art des Vorgangs sichergestellt, insbesondere unabhängig davon, ob der Geschäftsvorgang zwischen einem Kunden und dem Anbieter oder zwischen mehreren Kunden, wobei der Anbieter lediglich eine Art vermittelnde Plattform bereitstellt, dass Geschäftsvorgänge sofort Online abschließend bearbeitet werden können und Handunterschriften lediglich zur dauerhaften Dokumentation bereitgestellt werden. Ein postalischer Transport dieser Unterschriften bewirkt daher in Bezug auf den Abschluss keinen Zeitverzug.

Zur weiteren Erhöhung der Sicherheit ist in besonders bevorzugter Weiterbildung vorgesehen, dass unter Verwendung des Rechnersystems die zum abgeschlossenen Geschäftsvorgang bearbeiteten Unterlagen im Anschluss aufbereitet und dem beteiligten Geschäftspartner, insbesondere per Email und/oder auf einer Web-Plattform, beispielsweise unter Angabe einer vom Rechnersystem dem Geschäftsvorgang eindeutig zugewiesenen Abschlusskennung übertragen bzw. zugänglich gemacht werden. Auch eine hierbei auftretende Zeitverzögerung hat auf den eigentlichen Abschluss des Geschäftsvorgangs keinen Einfluss.

Um das erfindungsgemäße Verfahren darüber hinaus mittels einer Servereinrichtung durchzuführen, schlägt die Erfindung ferner ein Computerprogramm-Produkt mit auf wenigstens einem Computer lesbaren trägergespeicherten Programmcode und/oder ein, beispielsweise über das Internet abrufbares Computerprogramm mit Programmcode zur Durchführung des erfindungsgemäßen Verfahrens vor, wenn der Programmcode bzw. das Programm unter Verwendung einer einen Prozessor umfassenden Einrichtung mit einer Verbindung zum Internet abläuft, sowie ein digitales Speichermedium, insbesondere eine Diskette oder CD mit elektronisch auslesbaren Steuersignalen, die so in Verbindung mit einer programmierbaren Servereinrichtung mit einer Verbindung zum Internet zusammenwirken können, dass ein Online-System zur Durchführung des erfindungsgemäßen Verfahrens betreibbar ist.

Die Erfindung wird nachfolgend anhand eines bevorzugten Ausführungsbeispiels unter Bezugnahme auf die beigefügten Zeichnungen näher beschrieben.

In der Zeichnung zeigen:
- Fig. 1: ein beispielhaftes Ablaufschema einer bevorzugten Ausführungsform des erfindungsgemäßen Verfahrens, und
- Fig. 2: eine vereinfachte Prinzipskizze eines zur Durchführung des erfindungsgemäßen Verfahrens einsetzbaren Online-Systems.

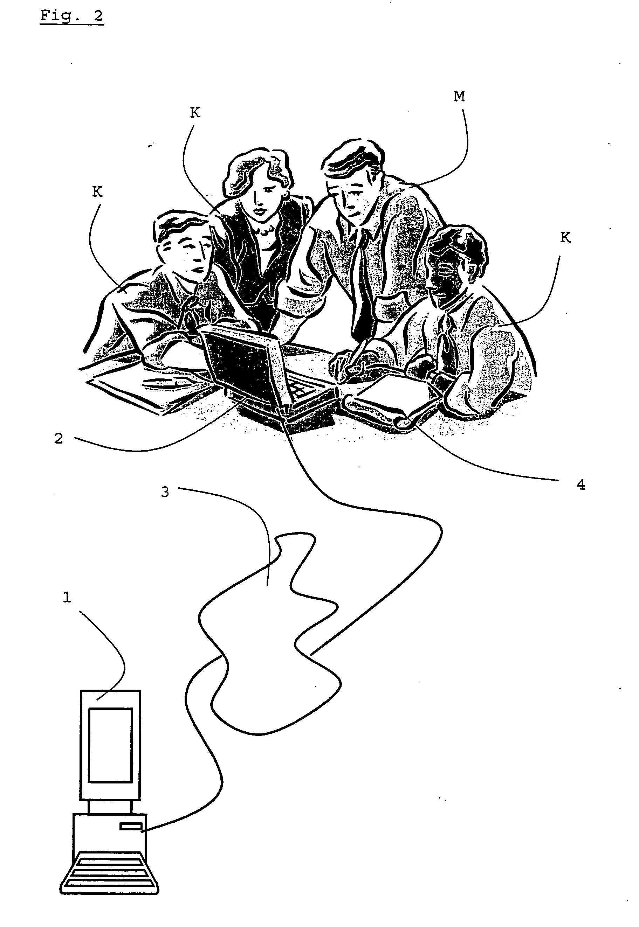

Zunächst auf Fig. 2 bezugnehmend, ist beispielhaft ein zur Durchführung des erfindungsgemäßen Verfahrens zweckmäßig ausgebildetes Online-System dargestellt. Das System umfasst ein Rechnersystem 1, insbesondere einen Web-Server, mit einer Verbindung zum Internet 3, auf welchem ein Anbieter über das Internet zugängliche Geschäftsformulare Online bereitstellt. Über eine auf Kundenseite angeordnete Internetfähige Endeinrichtung 2, beispielsweise in Form eines Laptops kann somit zum Rechnersystem 1 eine Kommunikationsverbindung aufgebaut werden, indem das Rechnersystem 1 über das Internet unter Angabe der entsprechenden Domain angewählt wird.

Im vorliegenden Beispielsfall sind drei Kunden oder Geschäftspartner K zusammen mit einem Mitarbeiter M des Anbieters gemeinsam um die Internetfähige Endeinrichtung 2 herum versammelt, um beispielsweise zwischen den Kunden K und dem Anbieter des Rechnersystems 1 ein Geschäft Online abzuwickeln.

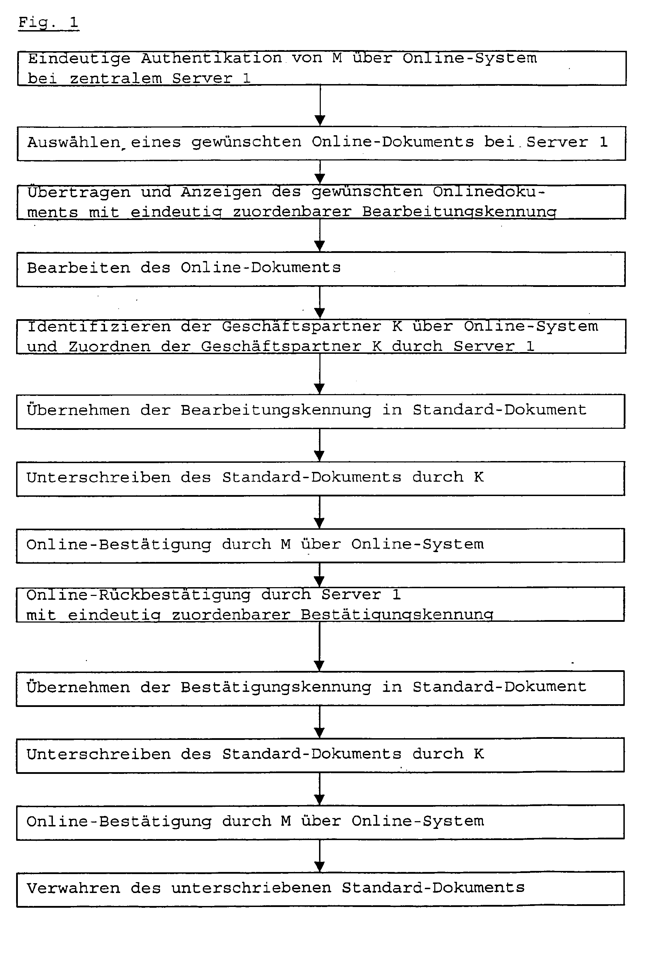

Auf dem Rechnersystem 1 sind hierzu eine Anzahl von über das Internet abrufbaren Geschäftsformularen unterschiedlicher Geschäftsvorgänge gespeichert und ein zur Durchführung des nachfolgend anhand der Fig. 1 bevorzugten, jedoch beispielhaft beschriebenen Ablauf einer erfindungsgemäßen Online-Abwicklung das Rechnersystem 1 entsprechend steuerndes Programm implementiert.

Über die Internetfähige Endeinrichtung 2 wird über das Internet 3 basierend auf der dem Rechnersystem 1 zugewiesenen Domain eine Verbindung zum Rechnersystem 1 aufgebaut. Der Mitarbeiter M des Anbieters gibt daraufhin einen ersten Sicherheitsdatensatz, beispielsweise eine persönliche Identitätsnummer und/oder ein Passwort ein, welche bzw. welches bei stehender Online-Verbindung vom Rechnersystem 1 zur Authentikation des Mitarbeiters M basierend auf einem dem Mitarbeiter M zugeordneten, gespeicherten Sicherheitsdatensatz verifiziert wird. Nach erfolgter Verifizierung, also eindeutiger Authentikation des Mitarbeiters M über das Online-System erfolgt die Initialisierung einer Online-Abwicklung.

Anhand einer anwendungsspezifischen Benutzeroberfläche wird über den Laptop 2 ein gewünschtes, vom Web-Server 1 in Form eines Online-Dokuments bereitgestelltes Geschäftsformular ausgewählt. Nach Auswahl beispielsweise durch Anklicken eines entsprechenden, auf dem Desktop angezeigten Buttons, wird diesem Geschäftsformulars vom Rechnersystem 1 eine eindeutige Bearbeitungskennung zugeordnet und in einem Speicher des Rechnersystems 1 gespeichert. Anschließend wird das zur Bearbeitung ausgewählte Geschäftsformular zur Bearbeitung freigegeben und entsprechend zur Anzeige auf dem Desktop des Laptops 2 an dieses übertragen. Die dem Geschäftsformular eindeutig zugeordnete Bearbeitungskennung wird in praktischer Weise gleichermaßen zur Anzeige an das Laptop 2 übertragen.

Der Mitarbeiter M und die Geschäftspartner K bearbeiten das ausgewählte Formular, beispielsweise durch Ausfüllen vorgegebener Felder. Derartige Felder umfassen insbesondere auch die Namen der einzelnen Geschäftspartner K, die vom Rechnersystem 1 während der Online-Abwicklung dem Authentikations-Sicherheitsdatensatz des Mitarbeiters M logisch zugeordnet werden.

Nachdem das Online- oder Web-basierte Formular bearbeitet worden ist, wird die vom Rechnersystem zugeordnete Bearbeitungskennung auf ein Standardpapierdokument 4 übertragen und von den Geschäftspartnern K unterschrieben.

In ergänzender oder alternativer Weise, insbesondere wenn die Internetfähige Endeinrichtung 2 mit einer Druckereinrichtung ausgestattet ist, kann das entsprechend bearbeitete Online-Formular ausgedruckt, vorzugsweise mit der Bearbeitungskennung versehen und anschließend unterschrieben werden.

Daraufhin überträgt der Mitarbeiter M einen weiteren Sicherheitsdatensatz an das Rechnersystem 1, so dass unter Ansprechen auf diesen Bestätigungs-Sicherheitsdatensatz, beispielsweise eine Transaktionsnummer, vom Rechnersystem 1 eine anwendungsspezifische Bestätigungsprozedur in Bezug auf das bearbeitete Geschäftsformular durchgeführt wird.

Es sei darauf hingewiesen, dass das ausgewählte Online-Formular anwendungsspezifisch auch mehrere, mit jeweils eindeutigen Bearbeitungskennungen zugeordnete Bereiche aufweisen kann, die in ansprechender Weise auf ein Papierdokument übertragen und von den Geschäftspartnern unterschrieben werden. In einem solchen Fall ist bevorzugt vorgesehen, dass nach Bearbeitung eines jeden dieser Bereiche der Mitarbeiter M zur Bestätigung einen entsprechenden Sicherheitsdatensatz an das Rechnersystem 1 überträgt.

Insbesondere wenn, wie im vorliegenden Beispielsfall ein Geschäftsvorgang zwischen Geschäftspartnern K und dem Anbieter abgewickelt wird, ist ferner bevorzugt vorgesehen, dass zur Rückbestätigung vom Rechnersystem 1 eine weitere, eindeutig dem Geschäftsvorgang zugeordnete Bestätigungs- oder Abschlusskennung übertragen und entsprechend den Geschäftspartnern angezeigt wird. Zweckmäßigerweise wird auch eine solche, den Geschäftsvorgang im Wesentlichen vollständig abschließende Abschlusskennung auf das Standardpapierdokument 4 übertragen und von den Geschäftspartnern K unterschrieben.

Darüber hinaus ist in weiterer bevorzugter Ausbildung vorgesehen, dass auch das Abzeichnen dieser Kennung durch ein weiteres sicheres Datensatz-basiertes Online-Bestätigen durch den Mitarbeiter M gegenüber dem Rechnersystem 1 durchgeführt wird.

Der Geschäftsvorgang ist somit abgeschlossen, wobei der Mitarbeiter M das mit den Kennungen und Unterschriften versehene Standardpapierdokument 4 als dauerhafte Bestätigung an sich nimmt. Gegebenenfalls können die gesamten Unterlagen zeitverzögert mittels des Rechnersystems 1 noch entsprechend aufbereitet werden und bevorzugt mittels Email oder Webbasiert bereitgestellt werden, so dass beispielsweise durch Eingabe der vorstehenden Abschlusskennung den Geschäftspartnern K Zugriff ermöglicht wird.

Es sei darauf hingewiesen, dass Abwandlungen und Modifikationen des vorstehend beschriebenen Verfahrens sowie des verwendeten Online-Systems innerhalb des Schutzbereichs der angehängten Ansprüche möglich sind. Insbesondere kann beispielsweise die Identifikation der Geschäftspartner K, denen der Mitarbeiter M beigeordnet ist, zur logischen Verknüpfung mit den von dem Mitarbeiter M übertragenen Sicherheitsdatensätzen im Wesentlichen an anderer Stelle, beispielsweise auch vor Auswahl eines gewünschten Online-Dokuments erfolgen.

Anwendungsspezifisch können die Formulare, insbesondere auch die den Aufbau, die Formatierung, interne Verknüpfungen und/oder Verweisungen betreffenden Daten wesentlichen von einander differieren. Ferner ist im Wesentlichen je nach Komplexität des Vorgangs eine unterschiedliche Anzahl von Datenhin- und/oder -rückübertragungen, insbesondere einzelner, geleistete Unterschriften bestätigende Sicherheitsdatensätze durchführbar. Darüber hinaus umfasst die Erfindung Ausführungsformen, bei den applikationsspezifische Voreinstellungen für die Umsetzung des elektronischen Formulars in ein Papierdokument anwählbar sind, um beispielsweise den vom Mitarbeiter M unterstützen Geschäftspartnern K Standardpapier-Kopien bzw. eine entsprechende Anzahl von Ausdrucken zur Verfügung zu stellen, die der Mitarbeiter M vorzugsweise zusätzlich unterschreibt.

Ferner sei darauf hingewiesen, dass das Rechnersystem 1 quasi als Mittler fungiert, beispielsweise zu bzw. von mehreren, an verschiedenen Orten bereitgestellten Internetfähigen Endeinrichtungen 2 Kommunikations- und/oder Datenverbindungen für den Zugriff auf das gleiche Web-Formular und dessen Bearbeitung aufgebaut sind, und entsprechend eine erfindungsgemäße Online-Abwicklung unter Verwendung der vom Anbieter des Rechnersystems 1 auf einer Interplattform bereitgestellten Formulare unter Einbindung mehrerer verteilter Endeinrichtungen abgewickelt wird. Hierbei werden zweckmäßiger Weise zumindest bis zum Online-Abschluss die Kundenidentitäten und die jeweiligen verifizierten Mitarbeiter-Sicherheitsdatensätze logisch einander zugeordnet.

Darüber hinaus umfasst die Erfindung Ausführungsformen, bei denen die Daten- und/oder Kommunikationsverbindung aufrecht erhalten wird. So ist je nach Anwendung vorgesehen, dass eine Bearbeitung der Web-Formulare zumindest teilweise auf Offline erfolgt. In einem solchen Fall ist nach erneutem Aufbau einer Daten- und/oder Kommunikationsverbindung zum Anbietersystem, um beispielsweise auf ein bereits ausgewähltes Formular zuzugreifen, dieses weiter zu bearbeiten oder einen Datenabgleich von einem Offline bearbeiteten Formulardatensatz durchzuführen, bevorzugt vorgesehen, zur erneuten Authentikation, Identifizierung und/oder Bestätigung vom Rechnersystem während einer vorherigen Online-Verbindung zugeordnete Kennungen zu verwenden.

## Patentansprüche

1. Verfahren zur sicheren elektronischen Online-Abwicklung eines Geschäftsvorgangs unter Verwendung wenigstens eines durch einen Anbieter auf einem Rechnersystem (1) bereitgestellten und über das Internet (3) zugänglichen Geschäftsformulars, und zwar zwischen wenigstens zwei Geschäftspartnern (K) oder wenigstens einem Geschäftspartner (K) und dem Anbieter, wobei Geschäftspartnern (K), die sich zusammen an einem Ort aufhalten wenigstens ein Mitarbeiter (M) des Anbieters beigeordnet wird und der Geschäftsvorgang unter Ansprechen auf die Übertragung an das Rechnersystem (1) von wenigstens einem, dem wenigstens einen Mitarbeiter (M) des Anbieters vom Rechnersystem (1) eindeutig zuordenbaren Sicherheitsdatensatz online durchgeführt und abgeschlossen wird.

2. Verfahren nach Anspruch 1, wobei das Rechnersystem während einer Online-Abwicklung eine logische Verbindung zwischen dem wenigstens einen übertragenen Sicherheitsdatensatz und den Geschäftspartnern (K) durchführt, die sich am gleichen Ort wie der Mitarbeiter (M) aufhalten, dem der wenigstens eine Sicherheitsdatensatz eindeutig zugeordnet wird.

3. Verfahren nach Anspruch 1 oder 2, wobei zur Initialisierung einer Online-Abwicklung das Rechnersystem (1) eine Authentikationsprozedur unter Ansprechen auf einen vom Rechnersystem (1) empfangenen ersten Sicherheitsdatensatz des Mitarbeiters (M) durchführt.

4. Verfahren nach einem der Ansprüche 1 bis 3, wobei vom Rechnersystem (1) einem zur Bearbeitung ausgewählten Geschäftsformular eine eindeutige Bearbeitungskennung oder einzelnen Bereichen des Geschäftsformulars jeweils eine eindeutige Bearbeitungskennung generiert und/oder zugeordnet wird und anschließend das ausgewählte Geschäftsformular zur Bearbeitung freigegeben wird, wobei die jeweilige eindeutige Bearbeitungskennung dem wenigstens einen Geschäftspartner (K) angezeigt wird.

5. Verfahren nach Anspruch 4, wobei nach Bearbeitung eines einer eindeutigen Bearbeitungskennung zugeordneten Geschäftsformulars und/oder Bereichs eines Geschäftsformulars eine Bestätigungsprozedur unter Ansprechen auf einen vom Rechnersystem empfangenen weiteren Sicherheitsdatensatz des Mitarbeiters (M) durchführt.

6. Verfahren nach Anspruch 4 oder 5, wobei ein bearbeitetes, einer eindeutigen Bearbeitungskennung zugeordnetes Geschäftsformulars, ein bearbeiteter, einer eindeutigen Bearbeitungskennung zugeordneter Bereich und/oder die eindeutige Bearbeitungskennung eines bearbeiteten Geschäftsformulars und/oder eines bearbeiteten Bereichs eines Geschäftsformulars an das Rechnersystem (1) zurück übertragen wird.

7. Verfahren nach einem der Ansprüche 1 bis 6, wobei zum Abschluss einer Online-Abwicklung vom Rechnersystem (1) dem Geschäftsvorgang eine eindeutige Abschlusskehnung zugeordnet und dem wenigstens einen Geschäftspartner (K) angezeigt wird.

8. Verfahren nach einem der Ansprüche 1 bis 7, wobei vom Rechnersystem (1) zugeordnete eindeutige Kennungen auf ein Papierdokument (4) übertragen werden und von dem wenigstens einen Geschäftspartner (K) abgezeichnet werden.

9. Verfahren nach einem der Ansprüche 1 bis 8, wobei ein Geschäftsformular und/oder Bereich eines Geschäftsformulars nach Bearbeitung auf ein Papierdokument (4) übertragen werden und von dem wenigstens einen Geschäftspartner (K) abgezeichnet wird.

10. Verfahren nach einem der Ansprüche 1 bis 9, wobei nach Online-Abschluss eines Geschäftsvorgangs unter Verwendung des Rechnersystems (1) den Geschäftsvorgang betreffende Daten entsprechend aufbereitet werden und dem wenigstens einen Geschäftspartner (K), insbesondere über das Internet (3), übermittelt und/oder bereitgestellt werden.

11. Online-System für Geschäftsabwicklungen, umfassend
- zumindest ein über das Internet (3) unter zumindest einer Domain zugängliches Rechnersystem (1) eines Online Anbieters, in welchem Daten über Geschäftsformulare abgelegt sind und auf welchem ein Programm abläuft, derart,
- dass das Rechnersystem (1) unter Ansprechen auf eine zumindest zeitweise aufgebaute Kommunikationsverbindung von wenigstens einer Internet-fähigen Endeinrichtung (2) zu dem Rechnersystem (1) und auf den Empfang von wenigstens einem, einem Mitarbeiter (M) des Anbieters eindeutig zuordenbaren Sicherheitsdatensatz zum Durchführen und Abschließen einer elektronischen Online-Abwicklung eines Geschäftsvorgangs ausgebildet ist.

12. Online-System nach Anspruch 11, **dadurch gekennzeichnet, dass** das Rechnersystem (1) eine Einrichtung zum Verifizieren eines empfangenen Sicherheitsdatensatzes eines Mitarbeiters (M) umfasst.

13. Online-System nach Anspruch 12, **dadurch gekennzeichnet, dass** das Rechnersystem (1) eine Einrichtung zur Durchführung einer Authentikationsprozedur unter Ansprechen auf einen empfangenen Authentikationsdatensatz eines Mitarbeiters (M) umfasst.

14. Online-System nach Anspruch 12 oder 13, **dadurch gekennzeichnet, dass** das Rechnersystem (1) eine Einrichtung zur Durchführung einer Bestätigungsprozedur unter Ansprechen auf einen empfangenen Bestätigungsdatensatz eines Mitarbeiters (M) umfasst.

15. Online-System nach einem der Ansprüche 11 bis 14, **dadurch gekennzeichnet, dass** das Rechnersystem (1) eine Einrichtung zur Herstellen einer logischen Verbindung zwischen dem wenigstens einen übertragenen Sicherheitsdatensatz und Geschäftspartnern (K) durchführt, die sich am gleichen Ort wie der Mitarbeiter (K) aufhalten, dem der wenigstens eine Sicherheitsdatensatz eindeutig zugeordnet wird.

16. Online-System nach einem der Ansprüche 11 bis 15, **dadurch gekennzeichnet, dass** das Rechnersystem (1) eine Einrichtung zum Generieren von eindeutigen Kennungen und zum eindeutigen Zuordnen der Kennungen zu Geschäftsvorgängen, Geschäftsformularen und/oder einzelnen Bereichen von Geschäftsformularen umfasst.

17. Online-System nach Anspruch 16, **dadurch gekennzeichnet, dass** das Rechnersystem (1) eine Einrichtung zum Übertragen von eindeutig zugeordneten Kennungen an die wenigstens eine Internet-fähige Endeinrichtung (2) und einen Speicher zum Speichern der eindeutig zugeordneten Kennungen umfasst.

18. Verwenden eines Online-Systems nach einem der Ansprüche 11 bis 17 zur Durchführung eines Verfahrens nach einem der Ansprüche 1 bis 10.

19. Computerprogrammprodukt mit auf wenigstens einem computerlesbaren Träger gespeichertem Programmcode zur Durchführung des Verfahrens nach einem der Ansprüche 1 bis 10, wenn das Programmprodukt auf einer einen Prozessor umfassenden Servereinrichtung mit einer Verbindung zum Internet abläuft.

20. Computerprogramm mit Programmcode zur Durchführung des Verfahrens nach einem der Ansprüche 1 bis 10, wenn das Programm auf einer einen Prozessor umfassenden Servereinrichtung mit einer Verbindung zum Internet abläuft.

21. Digitales Speichermedium, insbesondere Diskette oder CD, mit elektronisch auslesbaren Steuersignalen, die so mit einer programmierbaren Servereinrichtung mit einer Verbindung zum Internet zusammenwirken können, dass ein Online-System nach einem der Ansprüche 11 bis 18 betreibbar ist.
